(19) Europäisches Patentamt / European Patent Office / Office européen des brevets

(11) **EP 3 999 391 B1**

(12) **EUROPÄISCHE PATENTSCHRIFT**

(45) Veröffentlichungstag und Bekanntmachung des Hinweises auf die Patenterteilung:
**02.08.2023   Patentblatt 2023/31**

(21) Anmeldenummer: **20730190.4**

(22) Anmeldetag: **13.05.2020**

(51) Internationale Patentklassifikation (IPC):
***B60T 8/1766*** (2006.01)

(52) Gemeinsame Patentklassifikation (CPC):
**B60T 8/1766;** B60T 2270/604

(86) Internationale Anmeldenummer:
**PCT/EP2020/063284**

(87) Internationale Veröffentlichungsnummer:
**WO 2021/008755 (21.01.2021 Gazette 2021/03)**

(54) **FAHRZEUG-BREMSSYSTEM SOWIE VERFAHREN ZUM BETREIBEN EINES FAHRZEUG-BREMSSYSTEMS**

VEHICLE BRAKE SYSTEM AND METHOD TO USE A VEHICLE BRAKE SYSTEM

SYSTEME DE FREINS DE VEHICULE ET PROCEDE D'UTILISATION D'UN SYSTEME DE FREINS DE VEHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.07.2019   DE 102019210563**

(43) Veröffentlichungstag der Anmeldung:
**25.05.2022   Patentblatt 2022/21**

(73) Patentinhaber: **Audi AG**
**85045 Ingolstadt (DE)**

(72) Erfinder: **TREFFER, Ulrich**
**93333 Neustadt a. d. Donau (DE)**

(56) Entgegenhaltungen:
**DE-A1- 19 620 584          DE-A1- 19 624 491**
**DE-A1-102006 035 085**

**EP 3 999 391 B1**

**Beschreibung**

Die Erfindung betrifft ein Fahrzeug-Bremssystem mit einer radindividuellen Bremskraftverteiler-Einheit.

Zur Steigerung der Effizienz und Reichweite werden Bremsungen des Fahrzeugs durch einen Elektroantrieb im Generatorbetrieb (d.h. Rekuperations-Betriebsart) durchgeführt, sofern gewisse Randbedingungen erfüllt sind. Diese Bremsungen betreffen sowohl vom Fahrer durch Bedienelemente und die Bremsbetätigungseinrichtung initiierte Bremsungen, als auch von Fahrerassistenzsystemen, Notbremsfunktionen und autonomen Fahrsystemen angeforderte Verzögerungen.

Bei blendingfähigen Bremssystemen kann anstatt der Reibbremse, die geforderte Bremskraft ganz oder teilweise mit dem Elektroantrieb erzeugt werden. Zur Erreichung einer hohen Effizienz, muss dadurch in Abhängigkeit vom Antriebskonzept meist von der installierten Bremskraftverteilung des Reibbremssystems abgewichen werden. Diese variable Bremskraftverteilung aus Reibbremssystem plus Elektroantrieb wird in Abhängigkeit von fahrdynamischen Größen gesteuert und in Abhängigkeit des Fahrzustands geregelt. Zur Realisierung einer optimalen Bremskraftverteilung gibt es zudem Bremssysteme bei denen die Bremskraftverteilung des Reibbremssystems gesteuert bzw. geregelt werden kann. Die Bremskraftverteilung wird mittels im Steuergerät fest parametrierter Radumfänge berechnet.

Ein gattungsgemäßes Fahrzeug-Bremssystem weist ein (brake-by-wire) Reibbremssystem mit Fahrzeugrad-Bremsen an den Vorderachsrädern und den Hinterachsrädern des Fahrzeugs auf. Diese sind über ein elektronisches Steuergerät ansteuerbar. Das elektronische Steuergerät weist als Programmbausteine eine achsindividuelle Bremskraftverteiler-Einheit und eine radindividuelle Bremskraftverteiler-Einheit auf. Mittels der achsindividuellen Bremskraftverteiler-Einheit werden auf der Grundlage einer Reibbremssystem-Sollverzögerung eine Vorderachs-Sollverzögerung und eine Hinterachs-Sollverzögerung ermittelt. Die signaltechnisch nachgeschaltete radindividuelle Bremskraftverteiler-Einheit berechnet aus der Vorderachs-Sollverzögerung und aus der Hinterachs-Sollverzögerung radselektive Fahrzeugrad-Sollverzögerungen für die Vorder- und Hinterräder. Zudem generiert die radindividuelle Bremskraftverteiler-Einheit auf der Grundlage dieser radselektiven Fahrzeugrad-Sollverzögerungen entsprechende Stellsignale (z.B. Drehzahlsignal und Steuerventilsignal) zur Ansteuerung der jeweiligen Fahrzeugrad-Bremsen.

Im Stand der Technik erfolgt die Bremskraftverteilung mit einem voreingestellten, im Steuergerät unveränderlich hinterlegten Radumfangsverhältnis zwischen der Vorderachse und der Hinterachse.

Entspricht das im Fahrzeug vorherrschende mittlere Radumfangsverhältnis an den Vorder- und Hinterachsen nicht den im Steuergerät voreingestellten, festen Radumfangsverhältnis, so resultiert aus einer Änderung der Bremskraftverteilung auch eine Änderung der an den Vorderachs- und HinterachsRädern wirkenden Bremskraft. Diese Bremskraft-Änderung beeinflusst die Verzögerungskonstanz durch ein abweichendes Radumfangsverhältnis negativ. Die Längskraftschwankung ist direkt proportional zum fehlerhaft angenommenen Radumfangsverhältnis zwischen der Vorder- und Hinterachse und kann zu einer deutlichen Verzögerungsschwankung bei einer Bremskraftverteilung führen, woraus sich Komfortprobleme für den Fahrzeuginsassen ergeben können.

Aus der DE 10 2006 035 085 B4 ist ein Verfahren zur Bremskraftverteilung sowie in Bremskraftverteiler für ein Fahrzeug bekannt. Aus der DE 196 24 491 C2 ist eine Vorrichtung zum Steuern der Bremskraftverteilung eines Fahrzeugs bekannt. Aus der DE 196 20 584 B4 ist ein Verfahren zur Ermittlung eines Eintrittskriteriums in die elektronische Bremskraftverteilung bekannt.

Die Aufgabe der Erfindung besteht darin, ein Fahrzeug-Bremssystem bereitzustellen, bei dem ein im Vergleich zum Stand der Technik einwandfreier Bremsbetrieb ermöglicht ist.

Die Aufgabe ist durch die Merkmale des Anspruches 1 gelöst. Bevorzugte Weiterbildungen der Erfindung sind in den Unteransprüchen offenbart.

Gemäß dem Anspruch 1 ist dem elektronischen Steuergerät des Reibbremssystems ein Ermittlungsbaustein zugeordnet, mittels dem ein aktuelles Ist-Radumfangsverhältnis zwischen den Vorderachsrädern und den Hinterachsrädern des Fahrzeugs ermittelbar ist. Das elektronische Steuergerät des Reibbremssystems ermittelt unter Berücksichtigung des aktuellen Ist-Radumfangsverhältnisses die Vorderachs-Sollverzögerung und die Hinterachs-Sollverzögerung.

Beispielhaft kann in dem, dem Steuergerät zugeordneten Ermittlungsbaustein ein Lernalgorithmus hinterlegt sein, der das aktuelle Radumfangsverhältnis zwischen den Fahrzeugachsen ermitteln kann. Hierzu kann der Ermittlungsbaustein signaltechnisch mit einer Sensorik verbunden sein, mit deren Hilfe zum Radumfang der Vorderachs- und Hinterachsräder korrelierende Parameter erfassbar sind, zum Beispiel Vorderachs- und Hinterachs-Drehzahlen. Auf deren Grundlage kann das Ist-Radumfangsverhältnis mit Hilfe des Lernalgorithmus berechnet werden.

Im Steuergerät liegt durch einen Lernalgorithmus das im Fahrzeug existierende Ist-Radumfangsverhältnis zwischen den Vorder- und Hinterrädern vor.

Die Summe der Soll-Reibbremsmomente, bzw. der Soll-Reibbremskräfte, bzw. des Soll-Radbremsdruck an allen Rädern kann besonders bevorzugt signaltechnisch vor einer achsindividuellen Arbitrierung bzw. Beeinflussung anhand des gelernten Ist-Radumfangsverhältnisses und der aktuellen oder gewünschten Bremskraftverteilung der Reibbremse kompensiert bzw. skaliert werden.

Mittels der Skalierung der Reibbremskräfte bzw. Reibbremsmomente bzw. des Bremsdrucks kann bei einer Änderung der Bremskraftverteilung, je nach Qualität der Lernfunktion für das Radumfangsverhältnis, eine negative Beeinflussung der Längs-kräfte beim Bremsblending oder bei einer dynamischen Änderung der Bremskraftver-teilung verhindert werden.

Wird das Referenzrad der Radumfangslernfunktion (d.h. der Ermittlungs-Programmbaustein) zudem z.B. mittels GPS mit der realen Fahrgeschwindigkeit abgeglichen, so kann dadurch die resultierende Längskraft zwischen Reifen und Fahrbahn noch präziser berechnet werden. Das ist vor allem für Fahrerassistenzsysteme und autonome Fahrfunktionen von Vorteil.

Sofern die Summen-Reibbremskraft (d.h. die Reibbremssystem-Sollverzögerung) in Abhängigkeit des gelernten Radumfangsverhältnisses der Achsen skaliert wird, kann die resultierende Längskraft bei einer dynamischen Änderung des Radumfangsverhältnisses zudem ohne Ansteuerung von Einlass- oder Auslassventilen erzielt werden und somit im Fahrzeug akustisch relativ unauffällig dargestellt werden.

Zudem können nachgelagerte Lernfunktionen (z.B. Lernalgorithmus für den dynamischen Reibwert zwischen Bremsbelag und Bremsscheibe) diesen Effekt anhand der skalierten Größen berücksichtigen und werden dadurch nicht negativ beeinflusst.

In einer technischen Umsetzung kann eine Funktion das bereits koordinierte Soll-Summenradbremsmoment (oder alternativ Soll-Summenradbremskraft bzw. Soll-Bremsdruck) skalieren, bevor es achsweise oder auf einzelne Räder aufgeteilt wird. Als Eingangsgrößen sind notwendig: das Soll-Verzögerungsradmoment-Reibbremse (d.h. nachfolgend die Reibbremssystem-Sollverzögerung $V_{RBS}$), die Ist-Verteilung-Bremsmomente (d.h. nachfolgend die Bremskraftverteilung BKV (t)), ein Faktor des dynamischen Radradius (Radumfang) der Vorderachse, bezogen auf die Hinterachse oder alternativ die Vorderachse als Referenzachse (d.h. nachfolgend das Radumfangsverhältnis k(t)). Das raddynamisch kompensierte Soll-Verzögerungsradmoment (d.h. nachfolgend die kompensierte Sollverzögerung $V_{soll,komp}$) der Reibbremse kann durch folgende Formel berechnet werden:

$$V_{soll,komp} = V_{RBS}*(BKV(t)/(k(t)+1) - BKV(t))$$

Das damit berechnete Ausgangssignal ist ein virtuelles Soll-Radbremsmoment, das dann weiter auf Achsen und Räder durch nachgelagerte Funktionen aufgeteilt werden kann.

Nachfolgend sind Aspekte der Erfindung im Einzelnen nochmals hervorgehoben: So kann die achsindividuelle Bremskraftverteiler-Einheit auf der Grundlage der darin hinterlegten Bremskraftverteilung die Reibbremssystem-Sollverzögerung in die Hinterachs-Sollverzögerung und in die Vorderachs-Sollverzögerung aufteilen. Bevorzugt kann die in der achsindividuellen Bremskraftverteiler-Einheit hinterlegte Bremskraftverteilung während eines Bremsvorgangs nicht durchgängig konstant bzw. unveränderlich verbleiben, sondern vielmehr in Abhängigkeit von Fahrdynamik-Größen und/oder Fahrzustands-Größen variieren.

Das elektronische Steuergerät des Reibbremssystems kann bevorzugt eine Kompensier-Einheit aufweisen, mittels der die Vorderachs-Sollverzögerung und die Hinterachs-Sollverzögerung in Abhängigkeit vom aktuellen Ist-Radumfangsverhältnis angepasst werden können.

In einer technischen Umsetzung kann das jeweilige Stellglied der Fahrzeugrad-Bremse als Hydraulikkomponenten eine Hydraulikpumpe sowie ein Hydraulik-Steuerventil aufweisen. Von daher erzeugt das elektronische Steuergerät des Reibbremssystems (bzw. dessen radindividuelle Bremskraftverteiler-Einheit) als Stellsignale sowohl ein Drehzahlsignal zur Ansteuerung eines Pumpenmotors der Hydraulikpumpe als auch ein Ventilsteuersignal zur Ansteuerung des Hydraulik-Steuerventils. In diesem Fall ist es bevorzugt, wenn die Kompensier-Einheit in einer Signalflussrichtung der achsindividuellen Bremskraftverteiler-Einheit vorgelagert ist. In diesem Fall kann in der Kompensier-Einheit ein Lernalgorithmus hinterlegt sein, der auf der Grundlage der Reibbremssystem-Sollverzögerung und auf der Grundlage des Ist-Radumfangsverhältnisses eine kompensierte Sollverzögerung ermittelt. Die kompensierte Sollverzögerung liegt an dem Signaleingang der achsindividuellen Bremskraftverteiler-Einheit an und wird dort signaltechnisch verarbeitet. In der achsindividuellen Bremskraftverteiler-Einheit wird die kompensierte Sollverzögerungsvorgabe aufgeteilt in die Vorderachs-Sollverzögerung und in die Hinterachs-Sollverzögerung, und zwar unter Berücksichtigung der variablen Bremskraftverteilung.

Erfindungsgemäß wird also die Reibbremssystem-Sollverzögerung in Abhängigkeit von dem aktuellen Ist-Radumfangsverhältnis skaliert. Dadurch kann die resultierende Längskraft bei einer dynamischen Änderung des Radumfangsverhältnisses bevorzugt ohne direkte Ansteuerung des Hydraulik-Steuerventils der jeweiligen Fahrzeug-Radbremse erfolgen, so dass die Erfindung im Fahrzeug akustisch relativ unauffällig darstellbar ist.

Wie oben erwähnt, kann bevorzugt die Kompensier-Einheit in der Signalflussrichtung der achsindividuellen Bremskraftverteiler-Einheit vorgelagert sein. In diesem Fall kann die signaltechnisch vorgelagerte Kompensier-Einheit nicht nur auf der Grundlage der Reibbremssystem-Sollverzögerung und des Ist-Radumfangsverhältnisses, sondern zusätzlich auch auf der Grundlage der aktuellen, variablen Bremskraftverteilung die kompensierte Reibbremssystem-Sollverzögerung ermitteln. Der Wert der aktuellen, variablen Bremskraftverteilung kann über eine Rückführ-Signalleitung von der achsindividuellen Bremskraftverteiler-Einheit in die Kompensier-Einheit rückgeführt werden.

Die Erfindung ist besonders bevorzugt in einem zumindest teilweise elektrisch betriebenen Fahrzeug anwendbar. In diesem Fall weist das Fahrzeug zumindest an einer Fahrzeugachse einen Elektroantrieb mit einer Elektromaschine auf, die in einer Motorbetriebsart mittels einer Soll-Beschleunigungsvorgabe ansteuerbar ist. In einer Rekuperations-Betriebsart kann die Elektromaschine Bestandteil des erfindungsgemäßen Fahrzeug-Bremssystems sein. In diesem Fall kann das Fahrzeug-Bremssystem eine Summier-Einheit aufweisen, mittels der in einem Fahrzeug-Verzögerungsfall sämtliche Verzögerungsanforderungen zu einer Gesamt-Sollverzögerung aufsummiert werden. Zudem kann das Fahrzeug-Bremssystem eine Koordinier-Einheit aufweisen, die auf der Grundlage von Fahrbetriebsparametern die aufsummierte Gesamt-Sollverzögerung aufteilt in die Reibbremssystem-Sollverzögerung und in eine Elektromaschinen-Sollverzögerung für die in der Generatorbetriebsart arbeitende Elektromaschine.

Nachfolgend ist ein Ausführungsbeispiel der Erfindung anhand der beigefügten Figuren beschrieben. Es zeigen:

Fig. 1    in einem Blockschaltdiagramm ein Fahrzeug-Bremssystem eines elektrisch betriebenen Fahrzeugs; und

Fig. 2    in einem weiteren Blockschaltdiagramm eine grundsätzliche Softwarearchitektur in einem elektronischen Steuergerät eines Reibbremssystems des Fahrzeug-Bremssystems.

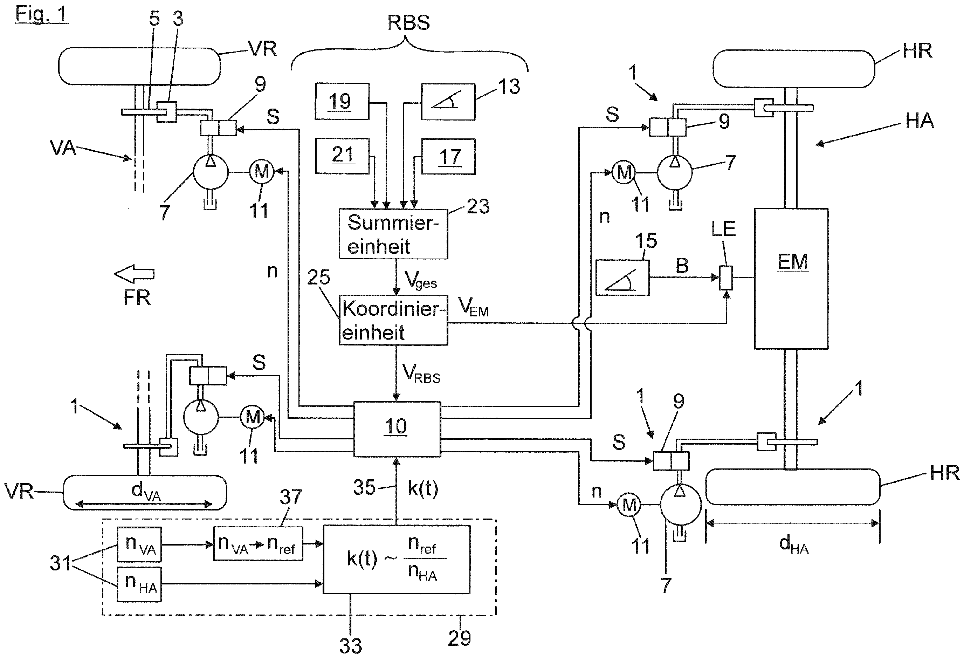

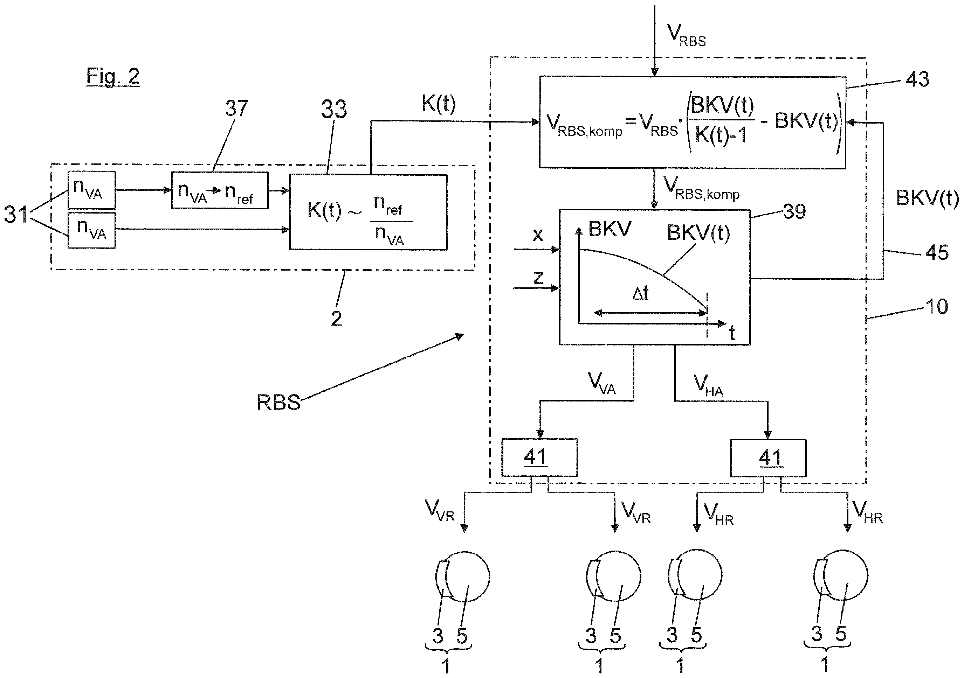

In der Fig. 1 ist grob schematisch ein Bremssystem bzw. eine Bremsanlage für ein zumindest teilweise elektrisch betriebenes Fahrzeug angedeutet. Das Bremssystem ist in der Fig. 1 nur insoweit dargestellt, als es für das Verständnis der Erfindung erforderlich ist. Entsprechend erfolgt in den Blockschaltdiagrammen der Figuren 1 und 2 die Signalverarbeitung anhand von Verzögerungswerten $V_{EM}$, $V_{RBS}$, etc. In einer tatsächlich realisierten Ausführungsvariante würde anstelle dessen die Signalverarbeitung anhand von physikalischen Größen erfolgen, die mit den Verzögerungswerten korrelieren (nämlich Bremsdruck, Drehmoment sowie Kraft) und die gängig sind bei der Berechnung der Aktuatoransteuerung (Reibbremse und Elektromotor).

Demzufolge weisen sowohl die Vorderräder VR als auch die Hinterräder HR des Fahrzeugs jeweils eine Fahrzeugrad-Bremse 1 auf. Die Fahrzeugrad-Bremse 1 ist aus einem, über einen (nicht gezeigten) Hydraulikzylinder betätigbaren Bremssattel 3 sowie einer Bremsscheibe 5 aufgebaut. Zur Betätigung der Fahrzeugrad-Bremse 1 wird deren Hydraulikzylinder druckbeaufschlagt, wodurch der Bremssattel 3 mit seinen Bremsbelägen in Druckanlage mit der Bremsscheibe 5 kommt.

In der Fig. 1 weist jede Fahrzeugrad-Bremse 1 als Stellglieder Hydraulickomponenten auf, und zwar eine Hydraulikpumpe 7, die als ein Druckaufbauaktor wirkt, sowie ein Hydraulik-Steuerventil 9. Ein elektronisches Steuergerät 10 des Reibbremssystems RBS erzeugt bei einer Bremsanforderung, d.h. bei einer Reibbremssystem-Sollverzögerung $V_{RBS}$, Stellsignale zur Ansteuerung der Fahrzeugrad-Bremsen 1. Die Stellsignale sind in der Fig. 1 ein Drehzahlsignal n für die Ansteuerung eines Pumpenmotors 11 der Hydraulikpumpe 7 und ein Ventilsteuersignal S für die Ansteuerung des Hydraulik-Steuerventils 10.

Es ist hervorzuheben, dass in einer tatsächlich realisierten Ausführungsvariante in der Regel nur ein zentraler Hydraulikaktuator mit Motor bereitgestellt ist, während die rad- und achsselektive Regelung alleine durch die Steuerventile 9 erfolgt. Dadurch können die Radbremsdrücke nicht ohne eine Ventilansteuerung achsindividuell geregelt werden.

Wie aus der Fig. 1 weiter hervorgeht, weist das Fahrzeug eine elektrifizierte Hinterachse HA auf, bei der die Hinterräder HR mittels einer Elektromaschine EM angetrieben werden. Die Leistungselektronik LE der Elektromaschine EM wird in der Fig. 1 mittels einer Soll-Beschleunigungsvorgabe B angesteuert, die in der Fig. 1 durch Betätigung eines Fahrpedals 15 erzeugt wird. Die Elektromaschine EM arbeitet bei einer Fahrzeugbeschleunigung in der Motorbetriebsart. Alternativ kann die Elektromaschine EM bei einer Fahrzeugverzögerung in einer Rekuperations-Betriebsart als Generator arbeiten.

In der Fig. 1 ist das Bremssystem mittels eines fahrerseitig betätigbaren Bremspedals 15, eines Fahrerassistenzsystems 17, eines Notbremssystems 19 und/oder eines weiteren autonomen Fahrsystems 21 aktivierbar, die allesamt in Signalverbindung mit einer Summiereinheit 23 sind. In der Summiereinheit 23 werden sämtliche Bremsanforderungen aufsummiert und daraus eine Gesamt-Sollverzögerung $V_{ges}$ berechnet. Die Gesamt-Sollverzögerung $V_{ges}$ wird in der Fig. 1 zu einem Koordinier-Baustein 25 geleitet, in dem in Abhängigkeit von Fahrbetriebsparametern die Gesamt-Sollverzögerung $V_{ges}$ aufgeteilt wird in die Reibbremssystem-Sollverzögerung $V_{RBS}$ und in eine Elektromaschinen-Sollverzögerung $V_{EM}$, mittels der die im Generatorbetrieb arbeitende Elektromaschine EM angesteuert wird, um eine Bremswirkung zu erzielen.

Die in der Koordinier-Einheit 25 generierte Reibbremssystem-Sollverzögerung $V_{RBS}$ liegt in der Fig. 1 am Signaleingang des elektronischen Steuergeräts 10 an, mittels dem während des Bremsvorgangs $\Delta t$ (Figur 2) die Fahrzeugrad-Bremsen 1 an der Vorderachse VA und/oder an der Hinterachse HA angesteuert werden.

In der Fig. 1 ist dem elektronischen Steuergerät 10 des Reibbremssystems RBS ein Ermittlungsbaustein 29 zugeordnet. Im Ermittlungsbaustein 29 wird ein aktuelles Ist-Radumfangsverhältnis k(t) zwischen den Vorderachsrädern VR und den Hinterachsrädern HR berechnet. Beispielhaft weisen in der Fig. 1 die Hinterräder HR einen Raddurchmesser

$d_{HA}$ auf, der größer bemessen ist als der Raddurchmesser $d_{VA}$ der Vorderräder VR. Das elektronische Steuergerät 10 ermittelt unter Berücksichtigung des aktuellen Ist-Radumfangsverhältnisses k(t) die Vorderrad-Sollverzögerungen $V_{VA}$ sowie die Hinterrad-Sollverzögerungen $V_{HA}$, auf deren Grundlage das elektronische Steuergerät 10 die Stellsignale S, n zur Ansteuerung der Fahrzeugrad-Bremsen 1 generiert.

Dem Ermittlungsbaustein 29 ist eine Sensorik 31 zugeordnet, mittels der die aktuelle Vorderachs-Drehzahl $n_{VA}$ und die aktuelle Hinterachs-Drehzahl $n_{HA}$ erfassbar sind. Auf deren Grundlage kann eine Auswerteeinheit 33 des Ermittlungsbausteins 29 das Ist-Radumfangsverhältnis k(t) ermitteln und über eine Signalleitung 35 an das elektronische Steuergerät 10 leiten. In der Fig. 1 weist der Ermittlungsbaustein 29 zudem eine Wandlereinheit 37 auf, mittels dem die Vorderachs-Drehzahl $n_{VA}$ als Referenz-Drehzahl $n_{ref}$ in der Auswerteeinheit 33 verwendet wird.

In der Fig. 2 ist die Softwarearchitektur des elektronischen Steuergeräts 10 detaillierter angedeutet, und zwar mit Programmbausteinen zur Erzeugung der Vorderrad-Sollverzögerungen $V_{VA}$ sowie der Hinterrad-Sollverzögerungen $V_{HA}$, auf deren Grundlage das elektronische Steuergerät 10 die Stellsignale S, n für Fahrzeugrad-Bremsen 1 generiert.

Demzufolge weist das elektronische Steuergerät 10 eine achsindividuelle Bremskraftverteiler-Einheit 39 und eine radindividuelle Bremskraftverteiler-Einheit 41 auf. In der achsindividuellen Bremskraftverteiler-Einheit 39 werden aus der Reibbremssystem-Sollverzögerung $V_{RBS}$ eine Vorderachs-Sollverzögerung $V_{VA}$ und eine Hinterachs-Sollverzögerung $V_{HA}$ ermittelt. In der radindividuellen Bremskraftverteiler-Einheit 41 werden aus der Vorderachs-Sollverzögerung $V_{VA}$ Vorderrad-Sollverzögerungen $V_{VR}$ und Hinterrad-Sollverzögerungen $V_{HR}$ ermittelt. Auf deren Grundlage generiert die radindividuelle Bremskraftverteilereinheit 41 die bereits erwähnten Stellsignale S, n, mit denen die Hydraulikkomponenten 7, 9 der Fahrzeugrad-Bremsen 1 ansteuerbar sind.

In der achsindividuellen Bremskraftverteiler-Einheit 39 wird die Reibbremssystem-Sollverzögerung $V_{RBS}$ auf der Grundlage einer darin hinterlegten Bremskraftverteilung BKV(t) aufgeteilt in die Vorderachs-Sollverzögerung $V_{VA}$ und in die Hinterachs-Sollverzögerung $V_{HA}$. Wie aus der Fig. 1 hervorgeht, ist die Bremskraftverteilung BKV(t) während des Bremsvorgangs $\Delta t$ in Abhängigkeit von Fahrdynamik- und Fahrzustandsgrößen x, z nicht konstant, sondern vielmehr variierend.

In der Fig. 2 ist eine Kompensier-Einheit 43 in einer Signalflussrichtung der achsindividuellen Bremskraftverteiler-Einheit 39 vorgelagert. In der Kompensier-Einheit 43 ist ein in der Figur 2 gezeigter Lernalgorithmus hinterlegt, mit dem auf der Grundlage der Reibbremssystem-Sollverzögerung $V_{RBS}$, des Ist-Radumfangsverhältnisses k(t) sowie auf der Grundlage der Bremskraftverteilung BKV(t) eine kompensierte Sollverzögerung $V_{RBS,komp}$. Die Bremskraftverteilung BKV(t) wird über eine Rückführleitung 45 von der achsindividuellen Bremskraftverteiler-Einheit 39 zum Kompensator-Baustein 43 rückgeführt.

PATENTANSPRÜCHE:

| | |
|---|---|
| 1. | Fahrzeugrad-Bremse |
| 3 | Bremssattel |
| 5 | Bremsscheibe |
| 7 | Hydraulikpumpe |
| 9 | Steuerventil |
| 10 | elektronisches Steuergerät |
| 11 | Pumpenmotor |
| 13 | Bremspedal |
| 17 | Fahrerassistenzsystem |
| 19 | Notsystem |
| 21 | weiteres autonomes Fahrsystem |
| 23 | Summiereinheit |
| 25 | Koordiniereinheit |
| 29 | Ermittlungsbaustein |
| 31 | Sensorik |
| 33 | Auswerteeinheit |
| 35 | Signalleitungen |
| 37 | Wandlereinheit |
| 39 | achsindividuelle Bremskraftverteiler-Einheit |
| 41 | radindividuelle Bremskraftverteiler-Einheit |
| 43 | Kompensier-Einheit |
| 45 | Rückführleitung |
| RBS | Reibbremssystem |

| x | Fahrdynamik-Größen |
|---|---|
| z | Fahrzustands-Größen |
| $V_{ges}$ | Gesamt-Sollverzögerung |
| $V_{RBS}$ | Reibbremssystem-Sollverzögerung |
| $V_{EM}$ | Elektromaschinen-Sollverzögerung |
| $V_{RBS,komp}$ | kompensierte Sollverzögerung |
| $V_{VA}$ | Vorderachs-Sollverzögerung |
| $V_{HA}$ | Hinterachs-Sollverzögerung |
| $V_{VR}$ | Vorderrad-Sollverzögerung |
| $V_{HR}$ | Hinterrad-Sollverzögerung |
| $k(t)$ | Ist-Radumfangsverhältnis |
| S | Steuerventilsignal |
| n | Drehzahlsignal |
| $n_{VA}$ | Vorderachs-Drehzahl |
| $n_{HA}$ | Hinterachs-Drehzahl |
| $n_{ref}$ | Referenzdrehzahl |
| EM | Elektromaschine |
| LE | Leistungselektronik |
| B | Beschleunigungs-Vorgabe |
| $BKV(t)$ | variable Bremskraftverteilung |
| $d_{VA}$ | Vorderrad-Durchmesser |
| $d_{HA}$ | Hinterrad-Durchmesser |
| $\Delta t$ | Bremsvorgang |
| $d_{HA}$ | Hinterrad-Durchmesser |
| $d_{VA}$ | Vorderrad-Durchmesser |

**Patentansprüche**

1. Bremssystem in einem Fahrzeug, dessen Reibbremssystem (RBS) an den Vorderrädern (VR) und an den Hinterrädern (HR) jeweils eine Fahrzeugrad-Bremse (1) aufweist, die über ein elektronisches Steuergerät (10) ansteuerbar ist, das eine achsindividuelle Bremskraftverteiler-Einheit (39) aufweist, mittels der aus einer Reibbremssystem-Sollverzögerung ($V_{RBS}$) eine Vorderachs-Sollverzögerung ($V_{VA}$) und eine Hinterachs-Sollverzögerung ($V_{HA}$) ermittelbar ist, und eine radindividuelle Bremskraftverteiler-Einheit (41) aufweist, mittels der aus der Vorderachs-Sollverzögerung ($V_{VA}$) Vorderrad-Sollverzögerungen ($V_{VR}$) und aus der Hinterachs-Sollverzögerung ($V_{HA}$) Hinterrad-Sollverzögerungen ($V_{HR}$) ermittelbar sind, auf deren Grundlage die radindividuelle Bremskraftverteiler-Einheit (41) Stellsignale (S, n) zur Ansteuerung der Fahrzeugrad-Bremsen (1) generiert, wobei dem elektronischen Steuergerät (10) des Reibbremssystems (RBS) ein Ermittlungsbaustein (29) zugeordnet ist, mittels dem ein aktuelles Ist-Radumfangsverhältnis ($k(t)$) zwischen den Vorderrädern (VR) und den Hinterrädern (HR) ermittelbar ist, und dass das Steuergerät (10) unter Berücksichtigung des aktuellen Ist-Radumfangsverhältnisses ($k(t)$) die Vorderrad-Sollverzögerungen ($V_{VR}$) und die Hinterrad-Sollverzögerungen ($V_{HR}$) ermittelt.

2. Bremssystem nach Anspruch 1, **dadurch gekennzeichnet, dass** dem Ermittlungsbaustein (29) eine Sensorik (31) zugeordnet ist, mittels der zum Radumfang bzw. Raddurchmesser ($d_{HA}$, $d_{VA}$) der Vorder- und Hinterräder (VR, HR) korrelierende Parameter, insbesondere Vorderachs-Drehzahl ($n_{VA}$) und Hinterachs-Drehzahl ($n_{HA}$), erfassbar sind, auf deren Grundlage das Ist-Radumfangsverhältnis ($k(t)$) in einer Auswerteeinheit (33) des Ermittlungsbausteins (29) ermittelbar ist.

3. Bremssystem nach Anspruch 1 oder 2, **dadurch gekennzeichnet, dass** die achsindividuelle Bremskraftverteiler-Einheit (39) auf der Grundlage einer darin hinterlegten Bremskraftverteilung ($BKV(t)$) die Reibbremssystem-Sollverzögerung ($V_{RBS}$) in die Vorderachs-Sollverzögerung ($V_{VA}$) und in die Hinterachs-Sollverzögerung ($V_{HA}$) aufteilt, und dass insbesondere die Bremskraftverteilung ($BKV(t)$) während eines Bremsvorgangs ($\Delta t$) in Abhängigkeit von Fahrdynamik- und/oder Fahrzustandsgrößen (x, z) variierbar ist.

4. Bremssystem nach Anspruch 1, 2 oder 3, **dadurch gekennzeichnet, dass** das elektronische Steuergerät (10) des Reibbremssystems (RBS) eine Kompensier-Einheit (43) aufweist, mittels der die im Steuergerät (10) ermittelten Vorderrad-Sollverzögerungen ($V_{VR}$) und Hinterrad-Sollverzögerungen ($V_{HR}$) anpassbar sind.

**5.** Bremssystem nach Anspruch 4, **dadurch gekennzeichnet, dass** die Kompensier-Einheit (43) in einer Signalfußrichtung der achsindividuellen Bremskraftverteiler-Einheit (39) vorgelagert ist, und dass insbesondere die Kompensier-Einheit (43) auf der Grundlage der Reibbremssystem-Sollverzögerung ($V_{RBS}$) und des Ist-Radumfangsverhältnisses (k(t)) eine kompensierte Sollverzögerung ($V_{RBS,komp}$) ermittelt, die am Signaleingang der achsindividuellen Bremskraftverteiler-Einheit (39) anliegt und dort verarbeitet wird.

**6.** Bremssystem nach Anspruch 5, **dadurch gekennzeichnet, dass** die Kompensier-Einheit (43) nicht nur auf der Grundlage der Reibbremssystem-Sollverzögerung ($V_{RBS}$) und des Ist-Radumfangsverhältnisses (k(t)), sondern auch auf der Grundlage der Bremskraftverteilung (BKV(t)) die kompensierte Sollverzögerung ($V_{RBS,komp}$) ermittelt.

**7.** Bremssystem nach einem der vorhergehenden Ansprüche, **dadurch gekennzeichnet, dass** zumindest eine Fahrzeugachse (VA, HA) über eine Elektromaschine (EM) antreibbar ist, und dass die Elektromaschine (EM) in einer Motorbetriebsart mittels einer Soll-Beschleunigungsvorgabe (B) ansteuerbar ist, und in einer Rekuperations-Betriebsart Bestandteil des Fahrzeug-Bremssystems ist.

**8.** Bremssystem nach Anspruch 7, **dadurch gekennzeichnet, dass** das Fahrzeug-Bremssystem eine Summiereinheit (23) aufweist, die in einem Fahrzeug-Verzögerungsfall sämtliche VerzögerungsAnforderungen, etwa von einem Bremspedal (13), einem Fahrerassistenzsystem (17), einem Notbremssystem (19) und/oder einem weiteren autonomes Fahrsystem (21) zu einem Gesamt-Sollverzögerung ($V_{ges}$) aufsummiert, und dass das Steuergerät (10) an einer Koordinier-Einheit (25) angeschlossen ist, die auf der Grundlage von Fahrbetriebsparametern die Gesamt-Sollverzögerung ($V_{ges}$) aufteilt in die Reibbremssystem-Sollverzögerung ($V_{RBS}$) und in eine Elektromaschinen-Sollverzögerung ($V_{EM}$) zur Ansteuerung der in der Generatorbetrieb arbeitenden Elektromaschine (EM).

**Claims**

**1.** Brake system in a vehicle, the friction braking system (RBS) of which has in each case one vehicle wheel brake (1) at the front wheels (VR) and at the rear wheels (HR), which is controllable by way of an electronic control device (10) which has a brake force distributor unit individual to each axle (39), by means of which from a friction braking system target deceleration ($V_{RBS}$) a front axle target deceleration ($V_{VA}$) and a rear axle target deceleration ($V_{HA}$) can be determined, and has a brake force distributor unit individual to each wheel (41), by means of which from the front axle target deceleration ($V_{VA}$) front wheel target decelerations ($V_{VR}$) and from the rear axle target deceleration ($V_{HA}$) rear wheel target decelerations ($V_{HR}$) can be determined, on the basis of which the brake force distributor unit (41) generates actuator signals (S, n) for controlling the vehicle wheel brakes (1), wherein a determination module (29) is assigned to the electronic control device (10) of the friction braking system (RBS) by means of which a current actual wheel circumference ratio (k(t)) between the front wheels (VR) and the rear wheels (HR) can be determined, and that the control device (10) determines the front wheel target decelerations ($V_{VR}$) and the rear wheel target decelerations ($V_{HR}$) taking into consideration the current actual wheel circumference ratio (k(t)).

**2.** Brake system according to claim 1, **characterised in that** a sensor system (31) is assigned to the determination module (29) by means of which parameters correlating to the wheel circumference or wheel diameter ($d_{HA}$, $d_{VA}$) of the front and rear wheels (VR, HR), in particular front axle rotational speed ($n_{VA}$) and rear axle rotational speed ($n_{HA}$), can be detected, on the basis of which the actual wheel circumference ratio (k(t)) can be determined in an evaluation unit (33) of the determination module (29).

**3.** Brake system according to claim 1 or 2, **characterised in that** the brake force distributor unit individual to each axle (39), on the basis of a brake force distribution (BKV(t)) stored therein, divides the friction braking system target deceleration ($V_{RBS}$) into the front axle target deceleration ($V_{VA}$) and into the rear axle target deceleration ($V_{HA}$), and that in particular the brake force distribution (BKV(t)) is variable during a braking procedure ($\Delta t$) depending on driving dynamic and/or driving state variables (x, z).

**4.** Braking system according to claim 1, 2 or 3, **characterised in that** the electronic control device (10) of the friction braking system (RBS) has a compensating unit (43) by means of which the front wheel target decelerations ($V_{VR}$) and rear wheel target decelerations ($V_{HR}$) determined in the control device (10) can be adapted.

**5.** brake system according to claim 4, **characterised in that** the compensating unit (43) is mounted upstream in a signal flow direction of the brake force distribution unit individual to each axle (39), and that in particular the compensating unit (43) determines on the basis of the friction braking system target deceleration ($V_{RBS}$) and the actual wheel circumferential ratio (k(t)) a compensated target deceleration ($V_{RBS,komp}$) which is applied to the signal input of the brake force distribution unit individual to each axle (39) and is processed there.

6. Brake system according to claim 5, **characterised in that** the compensating unit (43) determines the compensated target deceleration ($V_{RBS,komp}$) not only on the basis of the friction braking system target deceleration ($V_{RBS}$) and the actual wheel circumferential ratio (k(t)), but also on the basis of the brake force distribution (BKV(t)).

7. Brake system according to any of the preceding claims, **characterised in that** at least one vehicle axle (VA, HA) can be driven by way of an electric machine (EM) and that the electric machine (EM) is controllable in a motor operating mode by means of a target acceleration specification (B), and is in a recuperation operating mode a component of the vehicle brake system.

8. Brake system according to claim 7, **characterised in that** the vehicle brake system has a summation unit (23) which in the case of a vehicle deceleration sums all deceleration requirements, for example from a brake pedal (13), a driver assistance system (17), an emergency braking system (19) and/or a further autonomous driving system (21) to result in a total target deceleration ($V_{ges}$), and that the control device (10) is connected to a coordinating unit (25) which, on the basis of driving operational parameters, divides the total target deceleration ($V_{ges}$) into the friction brake system target deceleration ($V_{RBS}$) and into an electric machine target deceleration ($V_{EM}$) for controlling the electric machine (EM) working in the generator mode.

**Revendications**

1. Système de freinage dans un véhicule, dont le système de freinage par friction (RBS) sur les roues avant (VR) et sur les roues arrière (HR) présente respectivement un frein de roue de véhicule (1) qui est commandable par le biais d'un dispositif de commande (10) électronique, qui présente une unité de répartition de force de freinage (39) individuelle sur les essieux, au moyen de laquelle à partir d'une décélération théorique de système de freinage par friction ($V_{RBS}$) une décélération théorique d'essieu avant ($V_{VA}$) et une décélération théorique d'essieu arrière ($V_{HA}$) peuvent être déterminées, et présente une unité de répartition de force de freinage (41) individuelle sur les roues, au moyen de laquelle à partir de la décélération théorique d'essieu avant ($V_{VA}$), des décélérations théoriques d'essieu avant ($V_{VR}$) et à partir de la décélération théorique d'essieu arrière ($V_{HA}$), des décélérations théoriques de roue arrière ($V_{HR}$) peuvent être déterminées, sur la base de quoi l'unité de répartition de force de freinage (41) individuelle sur les roues génère des signaux de réglage (S, n) pour la commande des freins de roue de véhicule (1), dans lequel au dispositif de commande électronique (10) du système de freinage par friction (RBS) est associé un composant de détermination (29), au moyen duquel un rapport de circonférence de roue réel actuel (k(t)) entre les roues avant (VR) et les roues arrière (HR) peut être calculé, et que le dispositif de commande (10) calcule en tenant compte du rapport de circonférence de roue réel actuel (k(t)) les décélérations théoriques de roue avant ($V_{VR}$) et les décélérations théoriques de roue arrière ($V_{HR}$).

2. Système de freinage selon la revendication 1, **caractérisé en ce qu'**au composant de détermination (29) est associé un capteur (31), au moyen duquel des paramètres en corrélation avec la circonférence de roue ou le diamètre de roue ($d_{HA}$, $d_{VA}$)des roues avant et arrière (VR, HR), en particulier la vitesse de rotation d'essieu avant ($n_{VA}$) et la vitesse de rotation d'essieu arrière ($n_{HA}$), peuvent être détectés, sur la base de quoi le rapport de circonférence de roue réel (k(t)) peut être calculé dans une unité d'évaluation (33) du composant de détermination (29).

3. Système de freinage selon la revendication 1 ou 2, **caractérisé en ce que** l'unité de répartition de force de freinage (39) individuelle sur les essieux divise sur la base d'une répartition de force de freinage (BKV(t)) enregistrée dedans la décélération théorique de système de freinage par friction ($V_{RBS}$) en la décélération théorique d'essieu avant ($V_{VA}$) et en la décélération théorique d'essieu arrière ($V_{HA}$), et qu'en particulier la répartition de force de freinage (BKV(t)) peut être variée pendant un processus de freinage ($\Delta t$) en fonction de grandeurs de dynamique de déplacement et/ou d'état de déplacement (x, z).

4. Système de freinage selon la revendication 1, 2 ou 3, **caractérisé en ce que** le dispositif de commande (10) électronique du système de freinage par friction (RBS) présente une unité de compensation (43), au moyen de laquelle les décélérations théoriques de roue avant ($V_{VR}$) et les décélérations théoriques de roue arrière ($V_{HR}$) déterminées dans le dispositif de commande (10) peuvent être adaptées.

5. Système de freinage selon la revendication 4, **caractérisé en ce que** l'unité de compensation (43) est logée en amont dans un sens de pied de signal de l'unité de répartition de force de freinage individuelle sur les essieux (39), et qu'en particulier l'unité de compensation (43) détermine sur la base de la décélération théorique de système de freinage par friction ($V_{RBS}$) et du rapport de circonférence de roue réel (k(t)) une décélération théorique compensée ($V_{RBS,komp}$) qui repose sur l'entrée de signal de l'unité de répartition de force de freinage individuelle sur les essieux (39) et y est traitée.

6. Système de freinage selon la revendication 5, **caractérisé en ce que** l'unité de compensation (43) détermine non seulement sur la base de la décélération théorique de système de freinage par friction ($V_{RBS}$) et du rapport de circonférence de roue réel (k(t)), mais aussi sur la base de la répartition de force de freinage (BKV(t)) la décélération théorique compensée ($V_{RBS,komp}$).

7. Système de freinage selon l'une quelconque des revendications précédentes, **caractérisé en ce qu'**au moins un essieu de véhicule (VA, HA) peut être entraîné par le biais d'une machine électrique (EM), et que la machine électrique (EM) puisse être commandée dans un mode de fonctionnement de moteur au moyen d'une prescription d'accélération théorique (B), et fait partie du système de freinage de véhicule dans un mode de récupération.

8. Système de freinage selon la revendication 7, **caractérisé en ce que** le système de freinage de véhicule présente une unité d'addition (23) qui additionne dans un cas de décélération de véhicule toutes les exigences de décélération, par exemple d'une pédale de frein (13), d'un système d'assistance au conducteur (17), d'un système de freinage d'urgence (19) et/ou d'un autre système de déplacement (21) autonome pour former une décélération théorique entière ($V_{ges}$), et que le dispositif de commande (10) est raccordé à une unité de coordination (25) qui divise sur la base de paramètres de fonctionnement de déplacement la décélération théorique entière (Vges) en la décélération théorique de système de freinage par friction ($V_{RBS}$) et en une décélération théorique de machine électrique ($V_{EM}$) pour la commande de la machine électrique travaillant dans le mode de générateur (EM).

Fig. 1

EP 3 999 391 B1

Fig. 2

$$V_{RBS,komp} = V_{RBS} \cdot \left( \frac{BKV(t)}{K(t)-1} - BKV(t) \right)$$

BKV(t)

43

45

10

$V_{RBS}$

$V_{RBS,komp}$

39

BKV(t)

BKV

$\Delta t$

t

x

z

$V_{HA}$

$V_{VA}$

41

41

$V_{HR}$

$V_{HR}$

$V_{VR}$

$V_{VR}$

3 5 } 1

3 5 } 1

3 5 } 1

3 5 } 1

K(t)

33

$K(t) \sim \dfrac{n_{ref}}{n_{VA}}$

2

RBS

37

$n_{VA} \rightarrow n_{ref}$

$n_{VA}$   $n_{VA}$

31

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006035085 B4
- DE 19624491 C2
- DE 19620584 B4